# EUROPEAN PATENT APPLICATION

(11) **EP 1 304 634 A1**
(43) Date of publication of application: **23.04.2003**
(21) Application number: 01943863.9
(22) Date of filing: 27.06.2001
(51) Int. Cl.: G06F 17/60

(54) **ADVERTISEMENT PRINTING METHOD, ADVERTISEMENT PRINTING APPARATUS, ADVERTISEMENT PROVIDING METHOD, AND COMMODITY ADMINISTRATING METHOD**

(30) Priority: 30.06.2000 JP 2000198247; 26.12.2000 JP 2000394852
(71) Applicant: Tetra Laval Holdings & Finance S.A., 1009 Pully (CH)
(72) Inventor: BERGERIOUX, Claude, Tetra Pak (Suisse) SA, CH-1680 Romont (CH)
(74) Representative: Müller, Frank Peter, Dipl.-Ing.
(86) International application number: JP0105566
(87) International publication number: WO02003274

(57) **Abstract**

An advertisement printing method for printing advertising information directly on the external surface of a commodity at a retail shop (1) when a consumer purchases the commodity from a retailer.

The advertising information is an advertisement requested by an advertisement requester (5) having the requesting condition and is transmitted from a server computer (3) to the retail shop (1) on demand from a computer of an advertisement requester, when a consent is obtained from the mutual communications between the advertisement requester (5) and a server computer (3) connected with the requester via the Internet (4) and the requesting conditions matches the advertisement printing conditions.

The advertising information is offered at a proper time, in a proper place and with fresh and proper contents, and the printing method is changed from the method of the prior art, in which the prints are distributed, to the method in which the prints are prepared at the site.

## Description

### Technical Field

This invention relates to an advertisement printing method, an advertisement printing device, an advertisement offering method and a commodity management method.

### Background Art

When a consumer purchases a commodity from a retailer, in the retail shop, the consumer chooses a commodity, pays the purchase price in the register and checks out.
On a seal to be attached on the commodity, a packaging material (e.g. shopping bags) packaging or carrying the commodity and the appearance surface of the commodity, information of the commodity/advertisement and the design are usually printed.

### Disclosure of Invention

An advertisement printing method according to the invention is an advertisement printing method for printing the following advertising information, when a consumer purchases a commodity from a retailer, directly on a seal to be touched to the commodity, on a packaging material packing the commodity or carrying the commodity or, on the appearance surface of the commodity, in the retail shop:
the advertising information being an advertisements requested by an advertisement requester having requesting conditions, fulfilling the requesting conditions and advertisement printing conditions and, being transmitted from a server computer to the retail shop on demand from the computer of the advertisement requester, when a consent is obtained from communications between the computer of the advertisement requester and the server computer connected stocking the data base of the advertisement printing conditions via the Internet.

An advertisement offering method according to the invention comprises; showing advertisement printing conditions satisfying the requesting conditions of an advertisement requester with communications between the computer of the advertisement requester and a server computer connected stocking the data base of the advertisement printing conditions via the Internet; transmitting the advertising information fulfilling the requesting conditions and advertisement printing conditions, from the server computer to the retail shop on demand from the computer of the advertisement requester and; printing the advertising information, when a consumer purchases a commodity from a retailer, in the retail shop, directly on a seal to be touched to the commodity, on a packaging material packing the commodity or carrying the commodity or, on the appearance surface of the commodity.

In an embodiment of the advertisement printing method and advertisement offering method, the advertising information is transmitted to the retail shop from the server computer after receiving of a consumer purchase signal.

In an embodiment of the advertisement printing method and advertisement offering method, the advertisement information is saved in a memory storage after sending from the server computer to the retail shop.

In an embodiment of the advertisement printing method and advertisement offering method, the advertisement information publishes premiums such as a discount coupon and a coupon to the consumer who purchased the commodity.

In an embodiment of the advertisement printing method and advertisement offering method, the request conditions of the advertisement requester are time limitation of advertisement printing to the commodity, area limitation of the retail shop and kind-limited of the commodity to be printed.

In an embodiment of the advertisement printing method and advertisement offering method, the packaging material and the commodity to be printed with the advertisement information are chosen from liquid food packed by a gable top paper container, liquid food packed by a brick shape paper container, a bottle-packed commodity, a plastic container packed commodity, a commodity. packed by a corrugated cardboard, a commodity packed by a cardboard container, a plastic shopping bag and, a paper shopping bag.

In an embodiment of the advertisement printing method and advertisement offering method, the advertisement information is printed in check out at the cash register of the retail shop.

In an embodiment of the advertisement printing method and advertisement offering method, the advertisement information is printed with a printer having a cash register function.

In an embodiment of the advertisement printing method and advertisement offering method, the advertisement information is printed with a printer added to a cash register.

In an embodiment of the advertisement printing method and advertisement offering method, the advertisement information is printed in a neighborhood of the commodity showcase of the commodity to be printed in a retail shop.

In an embodiment of the advertisement printing method and advertisement offering method, the server computer receives printing result information from the retail shop printer.

In an embodiment of the advertisement printing method and advertisement offering method, the server computer transmits the printing result information of the retail shop printer to the computer of the advertisement requester.

An advertisement printing device is an advertisement printing device for printing;
(1) the advertising information being an advertisement requested by an advertisement requester having requesting conditions, fulfilling the requesting conditions and advertisement printing conditions and, being transmitted from a server computer to the retail shop on demand from the computer of the advertisement requester, when a consent is obtained from communications between the computer of the advertisement requester and the server computer connected stocking the data base of the advertisement printing conditions via the Internet,
(2) when a consumer purchases a commodity from a retailer, in the retail shop,
(3) directly on a seal to be touched to the commodity, on a packaging material packing the commodity or carrying the commodity or, on the appearance surface of the commodity.

In the embodiment of the advertisement printing device, a purchase sending means to transmit a purchase signal of a consumer to the server computer is provided for and, the advertisement information transmitted to the retail shop from the server computer in response to the purchase signal is printed.

In the embodiment of the advertisement printing device, a memory storage saving the advertisement information transmitted to the retail shop from the server computer is provided for.

In the embodiment of the advertisement printing device, a reading device reading commodity information of the commodity which a consumer purchases in the retail shop is provided for.

In the embodiment of the advertisement printing device, the advertisement printing device has a cash register function for the retail shop.

In the embodiment of the advertisement printing device, the advertisement printing device has a means to receive commodity information of the consumer purchase from the cash register in the retail shop.

A commodity administration method according to the invention comprises receiving, with the computer of a commodity owner through a server computer, a printing information obtained from printing of the following advertising information, when a consumer purchases a commodity from a retailer, directly on a seal to be touched to the commodity, on a packaging material packing the commodity or carrying the commodity or, on the appearance surface of the commodity, in the retail shop and, managing the commodity to analyze a sale trend of the commodity and inventory control from a commodity sale information provided by printing information:
the advertising information being an advertisement requested by an advertisement requester having requesting conditions, fulfilling the requesting conditions and advertisement printing conditions and, being transmitted from a server computer to the retail shop on demand from the computer of the advertisement requester, when a consent is obtained from communications between the computer of the advertisement requester and the server computer connected stocking the data base of the advertisement printing conditions via the Internet.

### Brief Description of Drawings

Fig. 1 is a schematic view of an example to use the advertisement printing method or the advertisement offering method in accordance with this invention.

Fig. 2 is a schematic view of an example of the advertisement printing device in accordance with this invention.

Fig. 3 is a schematic view of an example to use a commodity management method in accordance with this invention.

Fig. 4 is a flow chart showing an example of the procedure of the advertisement request of this invention.

### Best Mode for Carrying out the Invention

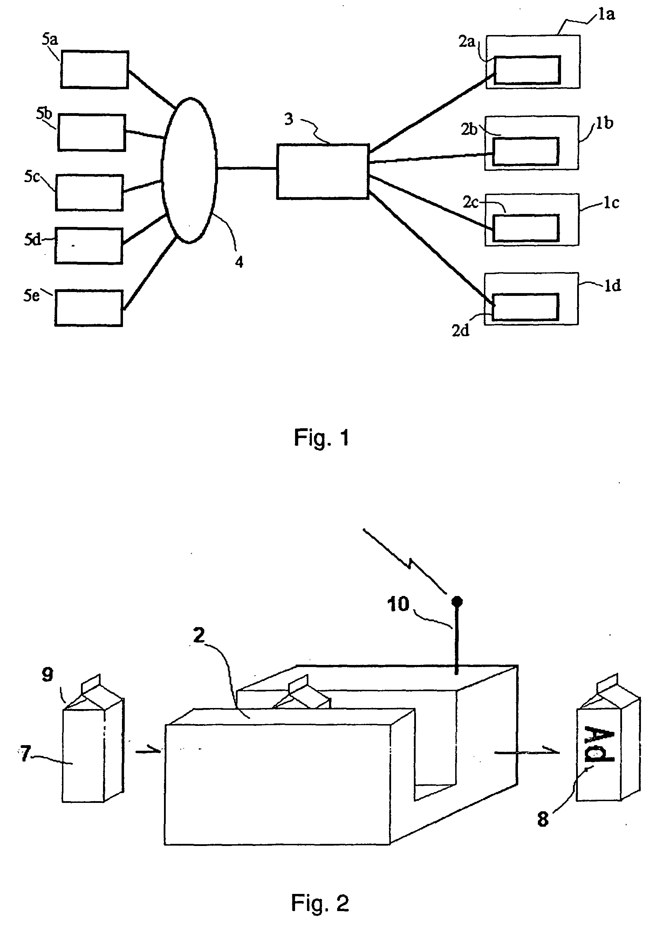

Fig. 1 is a schematic view of an example to use the advertisement printing method or the advertisement offering method in accordance with this invention.

Fig. 2 is a schematic view of an example of the advertisement printing device in accordance with this invention.

The advertisement printing method and an advertisement offering method of embodiment shown in Fig. 1 is the method to print advertisement information, directly on the seal to be attached to the commodity, on the packaging material packaging the commodity or carrying, on the appearance surface of the commodity, at the retail shop (for example, spur market, convenience store, department store, other store) (1 a, 1 b, 1 c, 1 d), when consumer purchases a commodity from a retailer.

The advertising information is an advertisement requested by an advertisement requester (for example, an individual, a company, an agency, a sponsor of events, public authorities) having requesting conditions, fulfilling the requesting conditions and advertisement printing conditions and, is transmitted from a server computer (3) to the retail shop (1a, 1b, 1c, 1d) on demand from the computer (5a, 5b, 5c, 5d, 5e) of the advertisement requester, when a consent is obtained from communications between the computer of the advertisement requester and the server computer (3) connected stocking the data base of the advertisement printing conditions via the Internet (4). In the retail shop, it is printed with each advertisement printing device, a printer (2a, 2b, 2c, 2d).

In the embodiment, the advertisement printing conditions satisfying the requesting conditions of an advertisement requester is offering, with communications between the computer of the advertisement requester and a server computer connected stocking the data base of the advertisement printing conditions, via the Internet.

The advertisement printing conditions data base (DB) comprises various kinds of conditions including an area, the timing, a shop, the price, a commodity to be advertised, and the database is accessibly installed with the server computer.

The printer used in this invention is a printer used by a normal method. A preferred printer can print it compactly and rapidly and, is independent from status of a printing surface. The printing methods include ink jet printing and, sublimation type thermal ink-transfer printing (with an overcoat). Preferably, it can be printed in several seconds.

In the embodiment of the advertisement printing device (printer (2)) shown in Fig. 2, after receiving purchase signal of consumer, the advertisement information is transmitted to the retail shop from server computer.
The advertisement information is transmitted to the retail shop beforehand from the server computer, and may be saved in the memory storage of the printer (2).

In this embodiment, a commodity to be printed with the advertisement information is liquid food packed in gable-top paper container (9), e.g. cowmilk packed in paper pack (9).

In this embodiment, printing of the advertisement information is done on the timing of check-out at a cash register of a retail shop.

In this embodiment, printing of advertisement information is done with the printer (2) having a register function.
A commodity (9) having the printable blank (7) is carried to the cash register by a consumer and, with the printer (2), is printed advertisement information (8) on the blank surface.

In the embodiment of the advertisement printing device, a purchase sending means (10) to transmit the purchase signal of the consumer to the server computer is provided for and, the advertisement information (8)transmitted to the retail shop from the server computer in response to the purchase signal is printed.

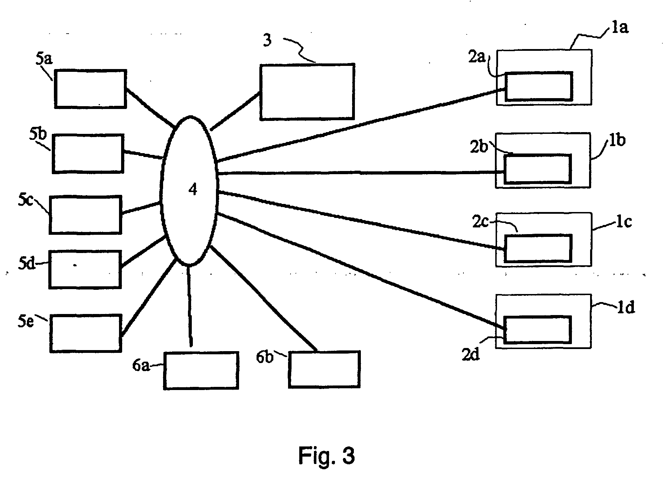

As shown in Fig. 3, the commodity administration method according to the invention comprises receiving, with the computer (6a, 6b) of the commodity owner (e.g. commodity source, maker and distributor, space offering company) through the server computer (3), the printing information obtained from the printing of the following advertising information, when a consumer purchases a commodity from a retailer, directly on a seal to be touched to the commodity, on a packaging material packing the commodity or carrying the commodity or, on the appearance surface of the commodity, in the retail shop (1a,1b,1c,1d) and, managing the commodity to analyze a sale trend of the commodity and inventory control from a commodity sale information provided by printing information:
The above advertising information is an advertisement requested by an advertisement requester having requesting conditions, fulfilling the requesting conditions and advertisement printing conditions and, is transmitted from a server computer to the retail shop on demand from the computer (5a, 5b, 5c, 5d, 5e) of the advertisement requester, when a consent is obtained from communications between the computer of the advertisement requester and the server computer connected stocking the data base of the advertisement printing conditions via the Internet.

In the above embodiment, the transmitting and receiving between the commodity owner and a server computer are communicated through Internet. The communication with wireless and special line may be preferable, too.

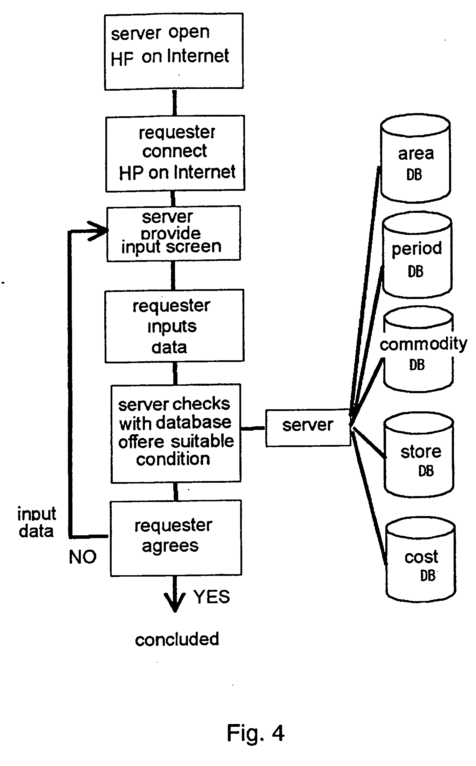

As Fig. 4 is referred to, the procedure how to obtain "advertisement information of an advertisement requester" in this invention is explained.
The website where the server computer raises an advertisement request on Internet (home page, HP) is opened and provided.
An advertisement requester is connected to the HP through Internet.
Depending on request of the requester, the HP provides an input screen of the request condition and, the HP promotes input to a requester.
The requester inputs data of a period, an area, a kind of a commodity, a kind and a number of a store, cost, advertisement space (e.g. number of characters, pictorial image) into the predetermined column of the with the input screen, and the requester transmits input data.
Based on the transmitted data, the server computer checks with database such as period database, area database, database on commodity, database on a store, cost database, and suitable advertisement condition is offered to the requester on the HP. The requester is promoted whether the requester agrees to the shown condition.
For the case of an agreement, the intention of the agreement is transmitted so that a contract is concluded.

On the other hand, for the case disagreement, the intention is transmitted and then the input screen is returned to.

In preferred embodiment of this invention, a commodity comprises a printable space, preferably flat some space on one part of appearance of the commodity.

In addition, as a premise of implementation of this invention, system printing the advertisement information is organized between the advertisement space offering company (a manufacturing company of the commodity, a maker, a distributor, a seller) and the operational management company of the server computer.

The advertising information is offered at a proper time, in a proper place and with fresh and proper contents, according to the system of the invention.

According to the system of the invention, the printing method is changed from the method of the prior art, in which the prints are distributed, to the method in which the prints are prepared at the site.

In accordance with the system of this invention, a commodity maker can provide the appearance surface of its commodity as advertising medium, space.

In accordance with a system of this invention, an advertisement requester can obtain new advertising medium.

In accordance with the system of this invention, people can advertise necessary subject matter in Internet easily in the required time at necessary places.

### Industrial Applicability

A method and a device of this invention are used by printing, a printing device and commodity management.

## Claims

1. An advertisement printing method for printing the following advertising information, when a consumer purchases a commodity from a retailer, directly on a seal to be touched to the commodity, on a packaging material packing the commodity or carrying the commodity or, on the appearance surface of the commodity, in the retail shop:
the advertising information being an advertisement requested by an advertisement
requester having requesting conditions, fulfilling the requesting conditions and
advertisement printing conditions and, being transmitted from a server computer to the retail shop on demand from the computer of the advertisement requester, when a consent is obtained from communications between the computer of the advertisement requester and the server computer connected stocking the data base of the advertisement printing conditions via the Internet.

2. An advertisement printing method as claimed in CLAIM 1, including transmitting the advertising information to the retail shop from the server computer after receiving of a consumer purchase signal.

3. An advertisement printing method as claimed in CLAIM 1, wherein the advertisement information is saved in a memory storage after sending from the server computer to the retail shop.

4. An advertisement printing method as claimed in CLAIM 1, wherein the advertisement information publishes premiums such as a discount coupon and a coupon to the consumer who purchased the commodity.

5. An advertisement printing method as claimed in CLAIM 4, wherein to the consumer who purchased the commodity, according to the advertising information and the commodity, the advertisement information publishes premiums such as discount coupon and a coupon.

6. An advertisement printing method as claimed in CLAIM 1, wherein the request conditions of the advertisement requester are time limitation of advertisement printing to the commodity, area limitation of the retail shop and kind-limited of the commodity to be printed.

7. An advertisement printing method as claimed in CLAIM 1, wherein the packaging material and the commodity to be printed with the advertisement information are chosen from liquid food packed by a gable top paper container, liquid food packed by a brick shape paper container, a bottle-packed commodity, a plastic container packed commodity, a commodity packed by a corrugated cardboard, a commodity packed by a cardboard container, a plastic shopping bag and, a paper shopping bag.

8. An advertisement printing method as claimed in CLAIM 1, wherein the advertisement information is printed in check out at the cash register of the retail shop.

9. An advertisement printing method as claimed in CLAIM 8, wherein the advertisement information is printed with a printer having a cash register function.

10. An advertisement printing method as claimed in CLAIM 8, wherein the advertisement information is printed with a printer added to a cash register.

11. An advertisement printing method as claimed in CLAIM 1, wherein the advertisement information is printed in a neighborhood of the commodity showcase of the commodity to be printed in a retail shop.

12. An advertisement printing device for printing
(1) the advertising information being an advertisement re quested by an advertisement requester having requesting conditions, fulfilling the requesting conditions and advertisement printing conditions and, being transmitted from a server computer to the retail shop on demand from the computer of the advertisement requester, when a consent is obtained from communications between the computer of the advertisement requester and the server computer connected stocking the data base of the advertisement printing conditions via the Internet,
(2) when a consumer purchases a commodity from a retailer, in the retail shop,
(3) directly on a seal to be touched to the commodity, on a packaging material packing the commodity or carrying the commodity or, on the appearance surface of the commodity.

13. An advertisement printing device as claimed in CLAIM 12, wherein a purchase sending means to transmit a purchase signal of a consumer to the server computer is provided for and,
the advertisement information transmitted to the retail shop from the server computer in response to the purchase signal is printed.

14. An advertisement printing device as claimed in CLAIM 12, wherein a memory storage saving the advertisement information transmitted to the retail shop from the server computer is provided for.

15. An advertisement printing device as claimed in CLAIM 12, wherein a reading device reading commodity information of the commodity which a consumer purchases in the retail shop is provided for.

16. An advertisement printing device as claimed in CLAIM 15, wherein the advertisement printing device has a cash register function for the retail shop.

17. An advertisement printing device as claimed in CLAIM 12, wherein the advertisement printing device has a means to receive commodity information of the consumer purchase from the cash register in the retail shop.

18. An advertisement offering method which comprises
showing advertisement printing conditions satisfying the requesting conditions of an advertisement requester with communications between the computer of the advertisement requester and a server computer connected stocking the data base of the advertisement printing conditions via the Internet,
transmitting the advertising information fulfilling the requesting conditions and advertisement printing conditions, from the server computer to the retail shop on demand from the computer of the advertisement requester and,
printing the advertising information, when a consumer purchases a commodity from a retailer, in the retail shop, directly on a seal to be touched to the commodity, on a packaging material packing the commodity or carrying the commodity or, on the appearance surface of the commodity.

19. An advertisement offering method as claimed in CLAIM 18, wherein the server computer receives printing result information from the retail shop printer.

20. An advertisement offering method as claimed in CLAIM 19, wherein the server computer transmits the printing result information of the retail shop printer to the computer of the advertisement requester.

21. A commodity administration method which comprises
receiving, with the computer of a commodity owner through a server computer, a printing information obtained from printing of the following advertising information, when a consumer purchases a commodity from a retailer, directly on a seal to be touched to the commodity, on a packaging material packing the commodity or carrying the commodity or, on the appearance surface of the commodity, in the retail shop and,
managing the commodity to analyze a sale trend of the commodity and inventory control from a commodity sale information provided by printing information:
the advertising information being an advertisement requested by an advertisement requester having requesting conditions, fulfilling the requesting conditions and advertisement printing conditions and, being transmitted from a server computer to the retail shop on demand from the computer of the advertisement requester, when a consent is obtained from communications between the computer of the advertisement requester and the server computer connected stocking the data base of the advertisement printing conditions via the Internet.
